Europäisches Patentamt

European Patent Office

Office européen des brevets

(11) Veröffentlichungsnummer : **0 156 926**
**B1**

# EUROPÄISCHE PATENTSCHRIFT

(45) Veröffentlichungstag der Patentschrift :
30.11.88

(21) Anmeldenummer : 84102642.0

(22) Anmeldetag : 10.03.84

(51) Int. Cl.⁴ : **B 32 B 21/02**, B 32 B 21/06,
B 27 N 3/00, B 44 C 3/02,
B 44 C 5/04

(54) Verfahren zur Herstellung von Formteilen.

(43) Veröffentlichungstag der Anmeldung :
09.10.85 Patentblatt 85/41

(45) Bekanntmachung des Hinweises auf die Patenterteilung : 30.11.88 Patentblatt 88/48

(84) Benannte Vertragsstaaten :
AT BE CH DE FR GB IT LI LU NL SE

(56) Entgegenhaltungen :
US-A- 3 916 059
US-A- 4 006 048

(73) Patentinhaber : Werzalit - Werke J.F. Werz KG
Gronauer Strasse 28
D-7141 Oberstenfeld (DE)

(72) Erfinder : Werz, Jakob Friedrich
Am Petersberg
D-7141 Oberstenfeld (DE)

(74) Vertreter : Bögl, Wolfgang, Dipl.-Ing.
Hölderlinstrasse 16
D-7121 Mundelsheim (DE)

## Beschreibung

Die Erfindung betrifft ein Verfahren zur Herstellung von wenigstens auf einem Teil der Oberfläche dekorativ beschichteten, aus einem nicht steigfähigen Gemisch von mit wärmehärtenden Bindemittel vermischten Faserstoffen gepreßten Formteilen, bei dem aus dem Gemisch zunächst durch Kaltpressen ein Vorpreßling hergestellt, danach der Vorpreßling in einem ersten Heißpreßvorgang auf seiner Unterseite mit einer Deckschicht versehen und anschließend in einem weiteren Heißpreßvorgang mit der dekorativen Deckschicht versehen wird.

Dieses Verfahren ist allgemein bekannt (siehe, z. B., DE-C-1 284 624). Mit ihm werden eine Vielzahl von mit einer dekorativen Hüllschicht versehene Profilkörper, wie Verkleidungsprofile für die Herstellung von Außen- und Innenverkleidungen auf dem Bausektor, Balkonverkleidungen, Tischplatten und dgl. hergestellt.

Beim Kaltpressen entsteht aus dem Gemisch der dem fertigen Profilkörper bereits sehr ähnliche Vorpreßling, der — obwohl ihm noch nicht die zum Aushärten des wärmehärtbaren Bindemittels erforderliche Wärmemenge zugeführt worden ist — bereits ein fester, handhabbarer Körper ist. Aus dem Vorpreßling entsteht dann durch Heißpressen der fertige Profilkörper. Zum Pressen werden Preßwerkzeugoberteile und Preßwerkzeugunterteile verwendet, welche der Gestalt des zu pressenden Profilkörpers entsprechend profiliert sind.

Das nicht steigfähige Gemisch besteht meist aus lignozellulosehaltigen Faserstoffen, wie zerkleinerten und getrockneten Holzspänen, Bagassefasern u. ä., die mit einem wärmehärtenden Kunstharz, wie einem Melamin-Harnstofformaldehyd- oder Phenolformaldehydharz vermischt sind.

Die Deckschicht besteht meist aus wenigstens zwei Schichten, nämlich einer Dekorschicht, beispielsweise aus einem Gewebe, einem Furnier, einer bedruckten Papierfolie oder einer Kunststoffolie, über der eine transparente Schutzschicht angeordnet ist. Als Schutzschicht wird meist sogenanntes klares Overlay-Papier, bestehend aus nicht gefülltem Alpha — Zellulose — Papier oder einem, mit einem Duroplast — meist auf Melaminbasis — getränkten Glasfaservlies verwendet. Die transparente Schutzschicht kann auch dadurch erzeugt werden, daß die Dekorschicht eine stärkere Harzschicht besitzt.

Die lignozellulosehaltigen Faserstoffe, beispielsweise Späne aus Buchen-, Fichten- oder Kiefernholz, besitzen einen mehr oder minder großen Anteil an natürlichen Harzen. Diese Harze können zwar im fertigen Profilkörper erwünscht sein, weil sie ihm bestimmte Eigenschaften verleihen. Sie sind aber beim ersten Heißpreßvorgang unerwünscht, weil sie durch den Preßdruck und die Wärmeeinwirkung fließen und sich daher auch auf den Oberflächen der Preßwerkzeuge ablagern. Das hat einerseits den Nachteil, daß die derart verunreinigten Preßwerkzeuge ziemlich oft gereinigt und überholt werden müssen, welches kostspielig ist. Da andererseits die gleichen Werkzeuge beim zweiten Heißpreßvorgang verwendet werden, können die Reste der natürlichen Harze auf die Dekorschicht bzw. die transparente Schutzschicht gepreßt werden. Das führt aber zu Fehlern in der Oberfläche des Profilkörpers und damit zu einer qualitativen Verschlechterung desselben.

Der Erfindung liegt daher die Aufgabe zugrunde, eine Maßnahme anzugeben, durch welche die Verschmutzung der Preßwerkzeugoberflächen und die qualitative Verschlechterung der Profilkörperoberfläche vermieden wird.

Diese Aufgabe ist erfindungsgemäß dadurch gelöst, daß die Oberseite des Vorpreßlings im ersten Heißpreßvorgang mit einer für natürliche Harze undurchlässigen Schicht versehen wird.

In Abhängigkeit vom quantitativen Anteil des Harzes im Faserstoff kann für die Schicht nicht imprägniertes, einseitig beschichtetes oder beidseitig beschichtetes Alpha — Zellulose — Papier verwendet werden. Wenn der Harzanteil eine bestimmte Menge nicht überschreitet, dann wird das natürliche Harz von dem unbeschichteten Alpha — Zellulose — Papier absorbiert. Wenn der Harzanteil einen bestimmten prozentualen Anteil überschreitet, dann ist es vorteilhafter, für die Schicht ein einseitig oder beidseitig mit einem künstlichen Harz beschichtetes Alpha — Zellulose — Papier zu verwenden. Die Schicht aus künstlichem Harz dient zum einen als Sperrschicht für das natürliche Harz und zum anderen als Bindemittel zwischen Vorpreßling und Dekorschicht.

## Patentansprüche

1. Verfahren zur Herstellung von wenigstens auf einem Teil der Oberfläche dekorativ beschichteten, aus einem nicht steigfähigen Gemisch von mit wärmehärtenden Bindemitteln vermischten Faserstoffen gepreßten Formteilen, bei dem aus dem Gemisch zunächst durch Kaltpressen ein Vorpreßling hergestellt, danach der Vorpreßling in einem ersten Heißpreßvorgang auf seiner Unterseite mit einer Deckschicht versehen und anschließend in einem weiteren Heißpreßvorgang mit der dekorativen Deckschicht versehen wird, dadurch gekennzeichnet, daß die Oberseite des Vorpreßlings im ersten Heißpreßvorgang mit einer für natürliche Harze undurchlässigen Schicht versehen wird.

2. Verfahren nach Anspruch 1, dadurch gekennzeichnet, daß für die undurchlässige Schicht nicht imprägniertes Alpha — Zellulose — Papier verwendet wird.

3. Verfahren nach Anspruch 1, dadurch gekennzeichnet, daß für die undurchlässige Schicht ein einseitig mit einem künstlichen Harz beschichtetes Alpha — Zellulose — Papier verwendet wird.

3          **0 156 926**          4

4. Verfahren nach Anspruch 1, dadurch gekennzeichnet, daß für die undurchlässige Schicht ein beidseitig mit einem künstlichen Harz beschichtetes Alpha — Zellulose — Papier verwendet wird.

## Claims

1. Method of manufacturing moulded parts compressed from a non-ascending mixture of fibers and a thermosetting bonding agent and decoratively coated on at least a part of their surfaces, in which from the mixture and by way of cold pressing at first a rough pressed block is made, whereupon the rough pressed block, in the course of a first hot-pressing process, is provided on its underside with a covering layer and, thereafter, in the course of a further hot-pressing process, with the decorative covering layer, characterized in that the top side of said rough pressed block, in the course of said first hot-pressing process, is provided with a layer which is impermeable to natural resins.

2. A method as claimed in claim 1, characterized in that non-impregnated alpha-cellulose paper is used for forming said impermeable layer.

3. A method as claimed in claim 1, characterized in that alpha-cellulose paper which is coated on one side with an artificial resin, is used for forming said impermeable layer.

4. A method as claimed in claim 1, characterized in that alpha-cellulose paper which is coated on both sides with an artificial resin, is used for forming said impermeable layer.

## Revendications

1. Procédé de fabrication de pièces moulées par compression à partir d'un mélange non expansible de matières fibreuses mélangées avec des liants thermodurcissables, ces pièces étant dotées d'un revêtement décoratif sur au moins une partie de leur surface, suivant lequel on fabrique d'abord une ébauche à partir du mélange, par compression à froid, puis on dote l'ébauche, dans un premier processus de compression à chaud, d'une couche de recouvrement sur sa face inférieure, et ensuite, dans un autre processus de compression à chaud, de la couche de recouvrement décorative ; caractérisé en ce que l'on dote la face supérieure de l'ébauche, dans le premier processus de compression à chaud, d'une couche imperméable aux résines naturelles.

2. Procédé selon la revendication 1, caractérisé en ce que l'on utilise, pour la couche imperméable, du papier de cellulose alpha non imprégné.

3. Procédé selon la revendication 1, caractérisé en ce que l'on utilise, pour la couche imperméable, un papier de cellulose alpha revêtu d'un côté par une résine synthétique.

4. Procédé selon la revendication 1, caractérisé en ce que l'on utilise, pour la couche imperméable, un papier de cellulose alpha revêtu des deux côtés par une résine synthétique.